# EUROPEAN PATENT SPECIFICATION

(11) **EP 1 614 612 B1**
(45) Date of publication and mention of the grant of the patent: **05.09.2007**
(21) Application number: 05076563.5
(22) Date of filing: 06.07.2005
(51) Int. Cl.: B62H 5/14

(54) **Lock intended to be mounted on the fork of a bicycle, moped or like two-wheeler**
Schloss zur Montage auf der Fahrradgabel oder ein ähnliches Fahrzeug
Serrure destinée à être montée sur la fourche de bicyclette ou véhicule similaire

(30) Priority: 07.07.2004 NL 1026608
(43) Date of publication of application: 11.01.2006
(73) Proprietor: STENMAN HOLLAND B.V., 3903 AV Veenendaal (NL)
(72) Inventor: van Wakeren, Gerrit, 3901 XA Veenendaal (NL)
(74) Representative: Winckels, Johannes Hubertus F.

(56) References cited:
- EP-A- 1 342 652
- WO-A-96/08403
- US-A- 2 099 606
- PATENT ABSTRACTS OF JAPAN vol. 2000, no. 02, 29 February 2000 (2000-02-29) -& JP 11 311046 A (ALPHA CORP), 9 November 1999 (1999-11-09)

## Description

The invention relates to a lock intended to be mounted on the fork of a bicycle, moped or like two-wheeler, provided with a holder part and a blocking element in the form of a lock pin pivotally connected thereto, and provided with a receiving part comprising a lock pin opening for receiving a free end of the lock pin with the lock in closed condition, the receiving part being provided with a cylinder housing in which the lock pin opening and a lock cylinder are situated and a locking pawl to be locked and released with the aid of the lock cylinder, which pawl is designed to engage a free end of the lock pin, which lock pin is provided to that end at the free end with a recess in which the locking pawl can engage for locking, and from which the locking pawl can be moved through rotation of the lock cylinder in the receiving part for releasing the lock pin, while, in use, the holder part is mounted adjacent one leg of the fork, while the lock pin can be pivoted between a releasing position in which the lock pin extends in a direction substantially parallel to said leg and a blocking position in which the lock pin extends between the spokes of the wheel and is received with its free end in the receiving part which, in use, is mounted adjacent another leg of the fork.

Such a lock is known from the European patent application EP-A-1 342 652. This publication also discloses a cover plate to protect, which cover plate covers the side of the cylinder housing remote from the key insertion side.

The drawback of the known lock is that the lock cylinder in the receiving part can be removed therefrom by unauthorized persons. Here, first, by means of a hammer, the free end of the lock pin remote from the receiving part is hit upon until, as a result thereof, the lock cylinder breaks. Then, the lock cylinder can simply be slid from the cylinder housing in axial direction of the lock cylinder. As a result thereof, the locking pawl will be released and the lock pin can be pulled from the receiving part and be pivoted to the releasing position.

The object of the invention is an improved lock and is thereto characterized, according to the invention, in that a key insertion side of the cylinder housing is at least partly covered by a cylinder housing safety provision manufactured from steel, which at least partly covers the end face of the lock cylinder in which the key is to be inserted, the cylinder housing safety provision comprising a first cover plate which is provided with a key insertion opening, as well as a second cover plate which covers the side of the cylinder housing remote from the key insertion side, the first and the second cover plate being mutually connected.

As a result of the presence of the cylinder housing safety provision, this lock cylinder cannot be removed from the receiving part even when the lock cylinder is broken. The fact is that the lock cylinder is confined by the cylinder housing safety provision. As a result of the presence of the cylinder housing safety provision, in a simple yet effective manner a lock is provided which meets the safety standards.

The second cover plate increases the resistance against sabotage of the lock. This resistance is even further increased by the mutual connection between the first and second cover plate. Such a mutual connection can for instance be realized by a body designed in one piece with the first and second cover plate, while in side view, the cylinder housing safety provision has a U-shaped configuration.

The one-piece design simplifies mounting the cylinder housing safety provision and furthermore offers a high integrity against vandalism.

Incidentally, in addition to or instead of the body, the mutual connection can also be realized by at least one connecting element such as, for instance, a rivet, bolt, screw or the like.

In addition to the mutual connection, the first cover plate and the second cover plate (12) can be connected to the cylinder housing with at least one connecting element, such as, for instance, a rivet, bolt, screw or the like.

According to a further elaboration of the invention, the cylinder housing of the receiving part is substantially cylindrical, while the cover plates are substantially circular.

Such a design provides an attractive lock and offers complete protection for the end faces of the cylindrical cylinder housing.

In order to prevent one of the legs from being bent away by an unauthorized person, an additional attaching element, already mentioned hereinabove, can be provided which extends through the cylinder housing and which connects the one leg to the other leg of the U-shaped cylinder housing safety provision.

In order to check whether a user has indeed locked his bicycle, in particular insurance companies often require that the user is in possession of his key. To derive any conclusive force therefrom, it is of course necessary that the key can only be taken from the lock when the lock is in closed condition. According to a further elaboration of the invention, preferably, in the receiving part, a provision is present ensuring that the key can only be taken from the lock cylinder when the lock pin is in the closed condition and is received in the receiving part.

According to a further elaboration of the invention, such a provision can comprise a second pawl and a spring, wherein the spring presses the second pawl in a position where the lock cylinder pins are not freely moveable so that the key cannot be taken from the lock cylinder, the second pawl extending with a first part in the lock pin opening in the cylinder housing while with a second part, it can engage the lock cylinder pins, while, when the lock pin is inserted into the lock pin opening, the second pawl will be pressed by the lock pin in a position where the second part of the second pawl allows free movement of the lock cylinder pins so that the key can indeed be taken from the lock cylinder.

In order to enable a simple operation of the lock and to guarantee a good confinement of the free end of the lock pin in the receiving part, according to a further elaboration of the invention it is particularly favorable when, apart from being pivotally connected to the holder part, the lock pin is also connected to the holder part so as to be slideable in its longitudinal direction.

JP-A-11311046 discloses a cylinder lock with a cylinder housing of which the key insertion side is at least partly covered by a cylinder housing safety provision in the form of a cover plate of high hardness provided with a key insertion opening, which cover plate at least partly covers the end face of the lock cylinder into which the key is to be inserted.

The invention will presently be further clarified on the basis of an exemplary embodiment, with reference to the drawing:
Fig. 1 shows a perspective view of an exemplary embodiment of the lock;
Fig. 2 shows a perspective view of the receiving part which has been partly taken apart;
Fig. 3 shows a perspective view of the receiving part which has been completely taken apart;
Fig. 4 shows a side view against the end face of the receiving part; and
Fig. 5 shows a cross-section along the line V - V of Fig. 4.

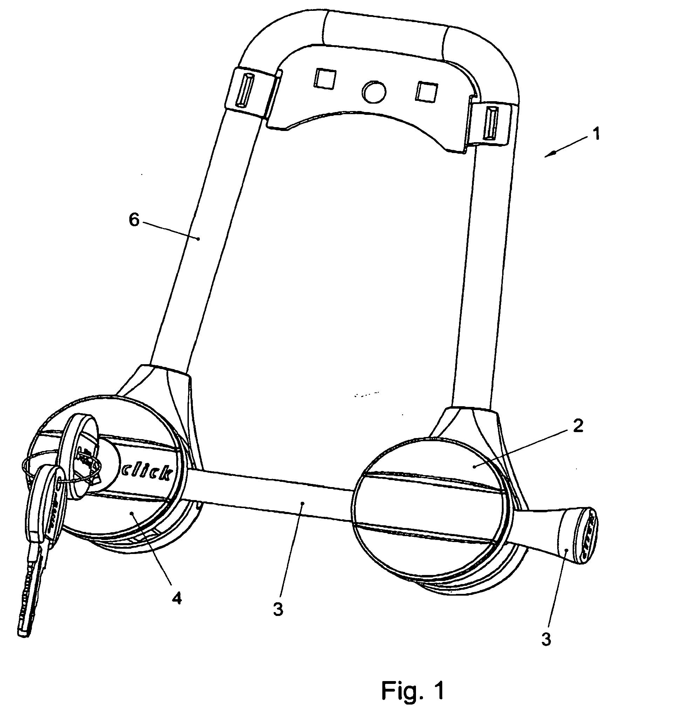

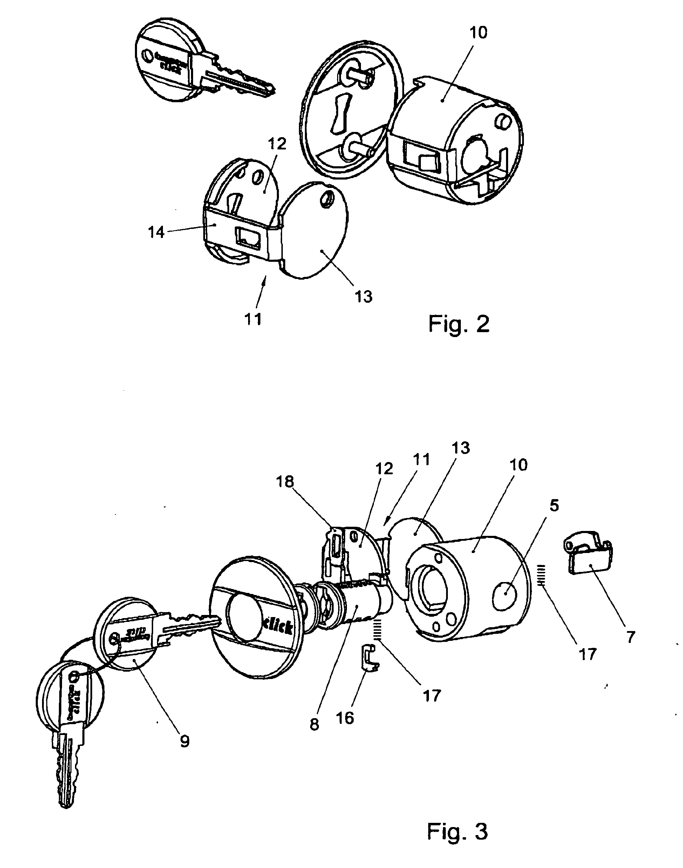

The lock 1 shown in Fig. 1 is intended to be mounted on the fork of a bicycle, moped or like two-wheeler. The lock is provided with a holder part 2 and a blocking element in the form of a lock pin 3 pivotally connected thereto. Further, a receiving part 4 is provided comprising a lock pin opening 5 (see Fig. 3) in which the free end of the lock pin 3 is received when the lock 1 is in closed condition. The holder part 2 and the receiving part 4 can be mounted directly on the legs of the fork. However, in the present exemplary embodiment, the holder part 2 and the receiving part 4 are mutually connected by a U-shaped bracket 6 which is attached on the fork. The lock pin 3 is pivotally connected to the holder part 2. Furthermore, in the present exemplary embodiment, the lock pin 3 is also connected to the holder part 2 so as to be slideable in its longitudinal direction. In opened condition, the lock pin 3 extends approximately parallel to the legs of the U-shaped bracket 6. In order to close the lock 1, the lock pin 3 is pivoted in the horizontal position shown and pressed in its longitudinal direction towards the receiving part 4. The free end of the lock pin 3 which is received in the lock pin opening 5 of the receiving part 4 is provided with a recess (not shown) on which a locking pawl 7 (see Fig. 3) engages. With the aid of the lock cylinder 8, which can be operated with the key 9, the locking pawl 7 can be brought into a releasing position in which it does not engage the lock pin 3. In the holder part 2, a spring is included which pulls the lock pin 3 from the lock pin opening 5. Further, the same or an additional spring is provided which pivots the lock pin 3 in the vertical position.

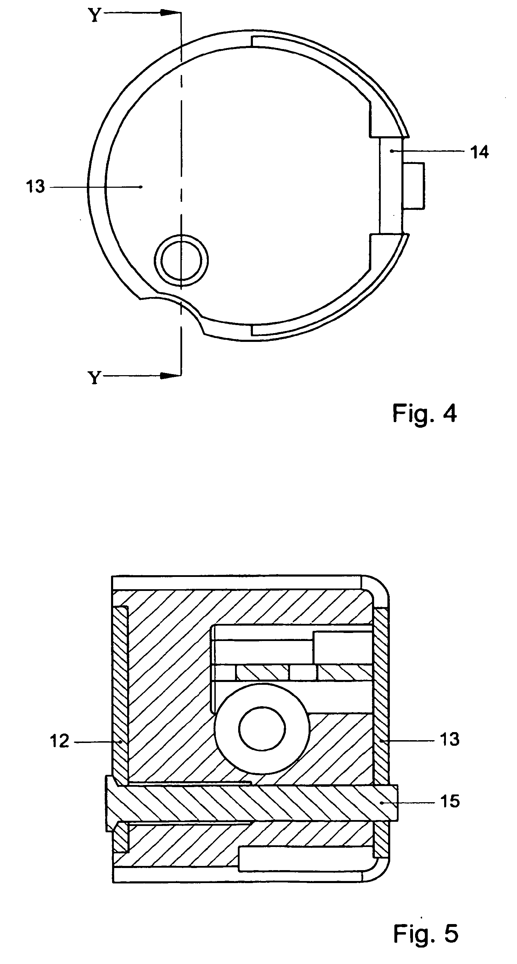

The receiving part 4 is provided with a cylinder housing 10 in which the lock cylinder 8 is received. In order to prevent the lock cylinder 8 from being removed from the housing, for instance after it has been broken through sabotage, a key insertion side of the cylinder housing 10 is at least partly covered by a cylinder housing safety provision 11 manufactured from steel. The cylinder housing safety provision 11 covers, at least partly, the end face of the lock cylinder 8 in which the key 9 is to be inserted. To that end, the cylinder housing safety provision 11 is provided with a first steel cover plate 12 provided with a key insertion opening. In the present exemplary embodiment, also, a second cover plate 13 is provided which covers the side of the cylinder housing 10 remote from the key insertion side. In the present exemplary embodiment, the two cover plates 12, 13 are mutually connected by a body 14 designed in one piece with the first and second cover plate 12, 13, respectively. Thus, in side view, the cylinder housing safety provision 11 has a U-shaped configuration, the cover plates 12, 13 forming the legs of the U and the rectangular connecting part 14 forming the body of the U. In the present exemplary embodiment, the cover plates 12, 13 are substantially circular and therefore cover the end faces of the (in the present exemplary embodiment) cylindrical cylinder housing 10 substantially completely. As is clearly visible in the side view of Fig. 4 and the cross-section along the line Y-Y of Fig. 4, which cross-section is represented in Fig. 5, the legs 12, 13 are also mutually connected by a rivet 15. It will be clear that also other connecting elements are eligible thereto, such as for instance screws, bolts or the like. Together with the body 14, the rivet 15 provides for a good connection between the legs 12, 13.

In the receiving part 4, further, a provision is present which ensures that the key 9 can only be taken from the lock cylinder 8 when the lock pin 3 is in the closed position and is received in the lock pin opening 5 of the receiving part 4. To that end, the provision comprises a second pawl 16 and a spring 17. The spring 17 presses this second pawl 16 into a position where the lock cylinder pins 18 of the lock cylinder 8 are not freely moveable so that the key 9 cannot be taken from the lock cylinder 8. The second pawl 16 extends with a first part in the lock pin opening 5 of the cylinder housing 10. A second part of the second pawl 16 is located adjacent the cylinder pins 18. With the lock pin 5 inserted in the lock pin opening 5, the second pawl 16 is pressed in a position where the second part of the second pawl allows a free movement of the cylinder pins 18, so that the key can indeed be taken from the lock cylinder 8. Thus, it is provided that the key 9 can only be taken from the lock cylinder 8 with the lock pin 3 in a closed condition, so that a user can prove, for instance to an insurance company, that he has locked his two-wheeler by showing the key 9.

It is clear that the invention is not limited to the exemplary embodiments described but that various modifications are possible within the framework of the invention as defined by the claims.

## Claims

1. A lock intended to be mounted on the fork of a bicycle, moped or like two-wheeler, provided with a holder part (2), and a blocking element in the form of a lock pin (3) pivotally connected thereto, and provided with a receiving part (4) comprising a lock pin opening (5) for receiving a free end of the lock pin (3) with the lock (1) in closed condition, the receiving part (4) being provided with a cylinder housing (10) in which the lock pin opening (5) and a lock cylinder (8) are situated and a locking pawl (7) to be locked and released with the aid of the lock cylinder (8), which pawl is designed to engage a free end of the lock pin (3), which lock pin (3) is provided to that end at the free end with a recess in which the locking pawl (7) can engage for locking, and from which the locking pawl (7) can be moved through rotation of the lock cylinder (8) in the receiving part (4) for releasing the lock pin (3) while, in use, the holder part (2) is mounted adjacent one leg of the fork, while the lock pin (3) can be pivoted between a releasing position in which the lock pin (3) extends in a direction substantially parallel to said leg and a blocking position in which the lock pin (3) extends between the spokes of the wheel and is received with its free end in the receiving part (4) which, in use, is mounted adjacent another leg of the fork, **characterized in that** a key insertion side of the cylinder housing (10) is at least partly covered by a cylinder housing safety provision (11) manufactured from steel, which at least partly covers the end face of the lock cylinder (8) into which the key is to be inserted, the cylinder housing safety provision (11) comprising a first cover plate (12) which is provided with a key insertion opening as well as a second cover plate (13) which covers the side of the cylinder housing (10) remote from the key insertion side, the first and the second cover plates (12, 13, respectively) being mutually connected.

2. A lock according to claim 1, wherein the mutual connection comprises at least one body (14) which is designed in one piece with the first and second cover plates (12, 13, respectively) while, in side view, the cylinder housing safety provision has a U-shaped configuration.

3. A lock according to claim 1 or 2, wherein the mutual connection comprises at least one connecting element (15), such as, for instance, a rivet, bolt, screw or the like.

4. A lock according to any one of the preceding claims, wherein the first cover plate (12) and the second cover plate (13) are connected to the cylinder housing (10) with at least one attaching element (15) such as, for instance, a rivet, bolt, screw or the like.

5. A lock according to any one of the preceding claims, wherein the cylinder housing (10) of the receiving part (4) is substantially cylindrical, while the cover plates (12,13) are substantially circular.

6. A lock according to any one of claims 1 - 5, wherein in the receiving part (4) a provision (16, 17) is present which ensures that the key (9) can only be taken from the lock cylinder (8) when the lock pin (3) is in the closed position and is received in the receiving part (4).

7. A lock according to claim 6, wherein the provision comprises a second pawl (16) and a spring (17), while the spring (17) presses the second pawl (16) into a position where the lock cylinder pins (18) are not freely moveable so that the key (9) cannot be taken from the lock cylinder (8), the second pawl (16) extending with a first part in the lock pin opening (5) in the cylinder housing (10) while with a second part, it can engage the lock cylinder pins (18), while, when the lock pin is inserted into the lock pin opening, the second pawl will be pressed by the lock pin in a position in which the second part of the second pawl allows free movement of the lock cylinder pins so that the key can indeed be taken from the lock cylinder.

8. A lock according to any one of the preceding claims, wherein apart from being pivotally connected to the holder part, the lock pin is also connected to the holder part so as to be slideable in its longitudinal direction.

## Patentansprüche

1. Schloss zur Montage an der Gabel eines Fahrrads, eines Mopeds oder eines ähnlichen Fahrzeugs, ausgestattet mit einer Haltevorrichtung (2) und einem Sperrglied in Form eines drehbar daran befestigten Verriegelungsbolzens (3), und ausgestattet mit einem Aufnahmeelement (4), das eine Verriegelungsbolzen-Öffnung (5) zur Aufnahme eines freien Endes des Verriegelungsbolzens (3) mit dem Schloss (1) im geschlossenen Zustand aufweist, wobei das Aufnahmeelement (4) mit einem Zylindergehäuse (10), in das die Verriegelungsbolzen-Öffnung (5) und ein Schließzylinder (8) eingelassen sind, und einer Verriegelungssperre (7), die mit Hilfe des Schließzylinders (8) verriegelt und entriegelt werden kann, ausgestattet ist, wobei die Sperre derart gestaltet ist, dass ein freies Ende des Verriegelungsbolzens (3) einrasten kann, wobei der Verriegelungsbolzen (3) zu diesem Zweck an dem freien Ende mit einer Aussparung versehen ist, in die die Verriegelungssperre (7) zum Verriegeln einrasten kann und von der die Verriegelungssperre (7) mittels Rotation des Schließzylinders (8) in dem Aufnahmeelement (4) zur Entriegelung des Verriegelungsbolzens (3) bewegt werden kann, während, bei Gebrauch, die Haltevorrichtung (2) angrenzend an eine Gabelscheide montiert ist, während der Verriegelungsbolzen (3) drehbar angebracht sein kann zwischen einer Entriegelungsposition, in der der Verriegelungsbolzen (3) in einer im Wesentlichen parallelen Richtung zu der Scheide verläuft, und einer Sperrposition, in der der Verriegelungsbolzen (3) zwischen den Radspeichen verläuft und mit seinem freien Ende in dem Aufnahmeelement aufgenommen wird, das, bei Gebrauch, angrenzend an eine andere Gabelscheide montiert ist, **dadurch gekennzeichnet, dass** eine Schlüsseleinführungsseite des Zylindergehäuses (10) mindestens teilweise von einer aus Stahl gefertigten Zylinderverkleidungs-Sicherheitseinrichtung (11) bedeckt ist, die mindestens teilweise die Stirnfläche des Schließzylinders (8) abdeckt, in die der Schlüssel eingeführt wird, wobei die Zylinderverkleidungs-Sicherheitseinrichtung (11) eine erste Abdeckplatte (12), die mit einer Schlüsseleinführungsöffnung ausgestattet ist, sowie eine zweite Abdeckplatte (13), die die der Schlüsseleinführungsseite abgewandte Seite des Zylindergehäuses (10) abdeckt, aufweist, wobei die erste und die zweite Abdeckplatte (12 bzw. 13) gegenseitig verbunden sind.

2. Schloss nach Anspruch 1, wobei die gegenseitige Verbindung mindestens einen Körper (14) umfasst, der in einem Stück mit der ersten und der zweiten Abdeckplatte (12 bzw. 13) gestaltet ist, während in Seitenansicht die Zylinderverkleidungs-Sicherheitseinrichtung eine U-förmige Anordnung aufweist.

3. Schloss nach Anspruch 1 oder 2, wobei die gegenseitige Verbindung mindestens ein Verbindungselement (15), wie beispielsweise einen Niet, einen Bolzen, eine Schraube oder dergleichen, aufweist.

4. Schloss nach einem der vorstehenden Ansprüche, wobei die erste Abdeckplatte (12) und die zweite Abdeckplatte (13) mit dem Zylindergehäuse (10) mit mindestens einem Befestigungselement (15), wie beispielsweise ein Niet, ein Bolzen, eine Schraube oder dergleichen, verbunden sind.

5. Schloss nach einem der vorstehenden Ansprüche, wobei das Zylindergehäuse (10) des Aufnahmeelements (4) im Wesentlichen zylindrisch ist, während die Abdeckplatten (12, 13) im Wesentlichen kreisförmig sind.

6. Schloss nach einem der Ansprüche 1 - 5, wobei in dem Aufnahmeelement (4) eine Einrichtung (16, 17) vorhanden ist, die sicher stellt, dass der Schlüssel (9) nur aus dem Schließzylinder (8) genommen werden kann, wenn sich der Verriegelungsbolzen (3) in der geschlossenen Position befindet und in das Aufnahmeelement (4) aufgenommen ist.

7. Schloss nach Anspruch 6, wobei die Einrichtung eine zweite Sperre (16) und eine Feder (17) aufweist, während die Feder (17) die zweite Sperre (16) in eine Position drängt, in der die Schließzylinder-Bolzen (18) nicht frei beweglich sind, sodass der Schlüssel (9) nicht aus dem Schließzylinder (8) genommen werden kann, wobei sich die zweite Sperre (16) mit einem ersten Teil in die Verriegelungsbolzen-Öffnung (5) in dem Zylindergehäuse (10) hinein erstreckt, während sie mit einem zweiten Teil in die Schließzylinder-Bolzen (18) einrasten kann, während die zweite Sperre, wenn der Verriegelungsbolzen in die Verriegelungsbolzen-Öffnung eingeführt ist, durch den Verriegelungsbolzen in eine Position gedrängt wird, in der der zweite Teil der zweiten Sperre eine freie Bewegung der Schließzylinder-Bolzen erlaubt, sodass der Schlüssel tatsächlich aus dem Schließzylinder genommen werden kann.

8. Schloss nach einem der vorstehenden Ansprüche, wobei, abgesehen davon, dass er drehbar mit der Haltevorrichtung verbunden ist, der Verriegelungsbolzen auch derart mit der Haltevorrichtung verbunden ist, so dass er in seine Längsrichtung verschiebbar ist.

## Revendications

1. Antivol à monter sur la fourche d'une bicyclette, d'un cyclomoteur ou d'un deux-roues du même genre, comportant une partie de support (2), et un élément de blocage sous forme d'un axe de blocage (3) monté pivotant sur celle-ci, et comportant une partie réceptrice (4) comprenant une ouverture d'axe de blocage (5) pour recevoir une extrémité libre de l'axe de blocage (3) avec l'antivol (1) à l'état fermé, la partie réceptrice (4) étant comportant un boîtier de cylindre (10) dans lequel sont situés l'ouverture d'axe de blocage (5) et un cylindre de blocage (8), et un cliquet de blocage (7) à bloquer et débloquer à l'aide du cylindre de blocage (8), lequel cliquet étant conçu pour venir en prise avec une extrémité libre de l'axe de blocage (3), lequel axe de blocage (3) comportant, à cette fin, à l'extrémité libre, une cavité dans laquelle le cliquet de blocage (7) peut se coupler pour le blocage, et hors de laquelle le cliquet de blocage (7) peut être sorti par rotation du cylindre de blocage (8) dans la partie réceptrice (4) pour débloquer l'axe de blocage (3) tandis que, en fonctionnement, la partie de support (2) est montée adjacente à un pied de la fourche, tandis que l'axe de blocage (3) peut être tourné entre une position de déblocage, dans laquelle l'axe de blocage (3) s'étend dans une direction sensiblement parallèle audit pied, et une position de blocage, dans laquelle l'axe de blocage (3) s' "étend entre les rayons de la roue et est reçu par son extrémité libre dans la partie réceptrice (4) qui, en fonctionnement, est montée adjacente à un autre pied de la fourche, **caractérisé en ce qu'**un côté d'insertion de clé du boîtier du cylindre (10) est au moins en partie couvert par un dispositif de sûreté du boîtier du cylindre (11) fabriqué en acier, qui couvre au moins en partie la face frontale du cylindre de blocage (8) dans laquelle la clé doit être insérée, le dispositif de sûreté du boîtier du cylindre (11) comprenant un premier couvercle (12) qui comporte une ouverture d'insertion de la clé, ainsi qu'un second couvercle (13), qui recouvre le côté dudit boîtier du cylindre (10) éloigné du côté d'insertion de clé, les premier et second couvercles (12, 13 respectivement) étant mutuellement joints.

2. Antivol selon la revendication 1, dans lequel la jonction mutuelle comprend au moins un corps (14), qui est conçu d'une pièce avec les premier et second couvercles (12, 13 respectivement) tandis que, en vue de côté, le dispositif de sûreté du boîtier du cylindre a une configuration en forme de U.

3. Antivol selon la revendication 1 ou 2, dans lequel la jonction mutuelle comprend au moins un élément de jonction (15) tel que, par exemple, un rivet, un boulon, une vis ou similaire.

4. Antivol selon l'une quelconque des revendications précédentes, dans lequel le premier couvercle (12) et le second couvercle (13) sont joints au boîtier de cylindre (10) pour au moins un élément de fixation (15) tel que, par exemple, un rivet, un boulon, une vis ou similaire.

5. Antivol selon l'une quelconque des revendications précédentes, dans lequel le boîtier de cylindre (10) de la partie réceptrice (4) est essentiellement cylindrique, alors que les couvercles (12, 13) sont essentiellement circulaires.

6. Antivol selon l'une quelconque des revendications 1-5, dans lequel se trouve un dispositif (16, 17) dans la partie réceptrice (4), qui garantit que la clé (9) ne peut être retirée du cylindre de blocage (8) que quand l'axe de blocage (3) est en position fermée et logé dans la partie réceptrice (4).

7. Antivol selon la revendication 6, dans lequel le dispositif comprend un second cliquet (16) et un ressort (17), tandis que le ressort (17) presse le second cliquet (16) vers une position dans laquelle les axes de blocage du cylindre (18) ne sont pas librement mobiles de sorte que la clé (9) ne puisse pas être retirée du cylindre de blocage (8), le second cliquet (16) s'étendant par une première partie dans l'ouverture d'axe de blocage (5) dans le boîtier du cylindre (10) tandis que, par une seconde partie, il peut venir en prise avec les axes de blocage du cylindre (18), tandis que, quand l'axe de blocage est inséré dans l'ouverture d'axe de blocage, le second cliquet est pressé par l'axe de blocage dans une position dans laquelle la seconde partie du second cliquet permet un déplacement libre des axes de blocage du cylindre, de sorte que la clé peut effectivement être retirée du cylindre de blocage.

8. Antivol selon l'une quelconque des revendications précédentes, dans lequel, à part le fait d'être relié à la partie de support de manière rotative, l'axe de blocage est également relié à la partie de support de façon à pouvoir coulisser dans sa direction longitudinale.
